# EUROPEAN PATENT APPLICATION

(11) **EP 2 453 545 A1**
(43) Date of publication of application: **16.05.2012**
(21) Application number: 10796758.0
(22) Date of filing: 06.07.2010
(51) Int. Cl.: H02J 3/32, H02J 7/02, B60W 20/00, B60L 11/18, B60K 6/00

(54) **SYSTEM AND METHODS FOR THE TWO-WAY TRANSFER OF ELECTRICAL ENERGY BETWEEN VEHICLES AND ELECTRICAL GRIDS**

(30) Priority: 07.07.2009 ES 200901548
(71) Applicant: Gamesa Innovation & Technology, S.L., 48170 Zamudio (ES)
(72) Inventor: VILLANUEVA MONZON, Mauro, E-28043 Madrid (ES)
(86) International application number: PCT/ES2010/070462
(87) International publication number: WO 2011/004046

(57) **Abstract**

A system for the bidirectional transfer of electrical power between vehicles (11) equipped with a means for storing electrical energy (13) and a utility grid (15) operated by one or several utility companies, which includes: a) a plurality of receptacles (21) for connecting these vehicles (11) to the utility grid (15); b) a management module (31) for the electric energy transfer located on board each of the vehicles (11) which includes: b1) a bidirectional converter (33) for effectuating the transfer; b2) a bidirectional meter (35) for electric power; b3) a communications unit (37) with a quasi real time data transfer system; b4) a central control unit (41); c) a module for the supervision and command (61) of said electric power transfer at each of the utility companies. The invention also refers to a method for effectuating said power transfer.

## Description

### FIELD OF THE INVENTION

This invention refers to systems and methods for the bidirectional transfer of electrical power between vehicles and electrical power storage devices and utility grids and, more specifically, systems and methods for the bidirectional transfer of electrical power between vehicles with electric batteries and utility grids.

### BACKGROUND OF THE INVENTION

At the moment, there exists a diversity of vehicles powered by electrical energy, grouped into three types:
- Electrical Vehicles (EV), in other words, vehicles having electrical traction, powered by a rechargeable battery.
- Hybrid Pluggable Electrical Vehicles (PHEV), in other words, vehicles equipped with an electric motor powered by a rechargeable battery and an internal combustion engine, both contributing towards traction.
- Hybrid Electrical Vehicles (HEV), in other words, vehicles equipped with an internal combustion engine and an electric motor powered by a rechargeable energy device - such as a battery - through, amongst other means, an internal combustion engine.

The expected, large-scale increase in these types of vehicles in the near future is posing important challenges for companies which provide electric power and grid operators, given that these entail important factors related with the complexity of managing and sizing utility grids.

On one hand, the recharging of batteries implies a new type of demand for electricity with very different characteristics from other electric consumer products. Therefore, for example, the charging of a large number of automobile batteries presents utility companies with the problem of adapting their grids to a demand which may present highly variable patterns with very important peaks at specific times.

On another hand, the existence of batteries on board automobiles in a predictably increasing number entails for the utility grids the possibility of using these as means for the storage of energy. In fact, since these previously mentioned electric vehicles appeared, diverse proposals have been made with regards to not only the transfer of electric energy from the utility grid to the batteries of the electric vehicles, but also in the reverse direction, taking advantage, in this regard, of different pricing for electrical power over different times. The 2009/0030713 patent application describes one of these proposals.

However, to date, no system has satisfactorily resolved the different problems involved - in fact, none are available commercially - resulting in a great demand in the electric industry for systems and methods in this regard.

This invention is aimed at satisfying this need.

### SUMMARY OF THE INVENTION

One object of this invention is to provide systems and methods which allow for the transfer of electric power between electrical vehicles and utility grids in the most optimized manner, including the provision of services for the storage of electric power in the batteries of these vehicles.

Another object of this invention is to provide systems and methods which allow for the transfer of electric power between electrical vehicles and utility grids, maximizing the connection time of the vehicles to the utility grid.

Another object of this invention is to provide systems and methods which allow for the transfer of electric power between electrical vehicles and utility grids, facilitating utility companies with an optimized management of their utility grids and means of power production.

Another object of this invention is to provide systems and methods which allow for the transfer of excess electric power generated from renewable sources to electrical vehicles and for its partial recovery at a later date, during periods of high demand.

In one regard, these and other objects are achieved by means of a system equipped with a plurality of receptacles for connecting these vehicles to the utility grid, a management module located on board each of these vehicles for this transfer of electric power, and a supervision and command module at each of the utility companies for this transfer of electric power; said management module is equipped with a bidirectional converter for the transfer of electric power between the utility grid and the means for power storage, a bidirectional meter of the transferred electric power, a communications unit with a system for quasi real time data transfer, and a central control unit with a first sub-unit for the storage of information concerning the transfer of electric power between the vehicle and the utility grid; finally, this supervision and command module for the transfer of electric power at each utility company has a communications unit with a system for quasi real time data transfer, a database of vehicles authorized to use the utility grid operated by that company and a central control unit.

According to a preferential embodiment, the management module also comprises a unit which communicates with the vehicle's control panel. This serves as a means by which to access all the information available in the vehicle, thus facilitating the rendering of services in addition to the basic battery recharge service when the vehicle connects to the grid.

In another preferential embodiment, the central control unit of the management module also entails a second sub-unit for storing information related with the vehicle's usage patterns, and a third sub-unit which guarantees the vehicle's availability. This second sub-unit facilitates that the system has available all the information necessary for the optimized rendering of services of power transfer from the vehicle to the grid, and the third sub-unit facilitates that the vehicle's user is supplied with relevant information.

In another preferential embodiment, the supervision module's control unit is connected to the utility company's management system. This facilitates taking advantage to the maximum of all available information as much on the demand for electric power used for recharging vehicle batteries as on the availability of electric power stored in vehicle batteries.

In another preferential embodiment, the quasi real time data transfer between the management and supervision modules is a messaging system which uses wireless networks and, amongst these, mobile telephony. By using well-known systems, communications management between the management and supervision modules is facilitated.

In another preferential embodiment, the quasi real time data transfer between the management and supervision modules is a data transfer system which uses the utility grid. The use of a private communications system between the management and supervision modules implies advantages for the rendering of those particular services which imply a more complex management.

In another preferential embodiment of the invention, receptacles used in the connections are standard receptacles for connecting electrical devices having an interchange circuit between these and the utility grid and a switch device governed by the supervision module. This achieves the standardization of the device used for connecting vehicles to the utility grid.

In another preferential embodiment of the invention, these connection receptacles are located in parking spaces of public or private garages. This facilitates, on one hand, the installation of these devices for connection to the utility grid and, on another hand, the maximization of the vehicle's connection time to the utility grid.

In another regard, these and other objects are fulfilled by means of a method which includes the following steps: connection of the vehicles to the utility grid at one of the connection receptacles ubiquitously foreseen for this purpose, identification and authorization of this connection and management of the power transfer, in either direction, between the means for electric power storage and the utility grid, using pre-established criteria.

Other characteristics and advantages of this invention will become evident through the detailed description which follows the illustrations of their object, in relation with the accompanying figures.

### DESCRIPTION OF THE FIGURES

Figure 1 shows a Hybrid Pluggable Electrical Vehicles (PHEV - Vehiculos Eléctricos Hibridos Enchufables) of known technological characteristics.
Figure 2 is a block diagram of a system for the transfer of electrical power between vehicles with electrical power storage devices and utility grids, in accordance with this invention.
Figure 3 is a block diagram of the management module of the system illustrated in Figure 2, located on board these vehicles.
Figure 4 is a block diagram of the supervision module of the system illustrated in Figure 2, installed at the utility companies.

### DETAILED DESCRIPTION OF THE INVENTION

Next follows a description of the preferential execution of this invention as regards PHEV vehicles, but as the skilled in the art will appreciate, the invention is also applicable to other types of electrical vehicles equipped with autonomous means for storage. For a correct understanding of this invention, it may be of interest to briefly describe, firstly, how these vehicles function.

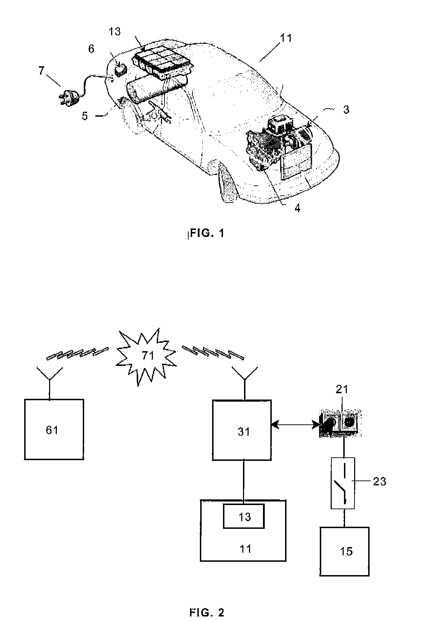

In Figure 1 is observed that a conventional PHEV 11 is made up of an electric motor 3, a combustion engine 4, a fuel tank 5, a battery 13, a charger 6 and a connection cable 7 for recharging the battery 13, as required, through the utility grid. The user of the PHEV 11 is responsible for recharging the battery by connecting the connector 7 to a connection receptacle which provides access to the utility grid. If this receptacle belongs to, for example, the home of the user of the PHEV 11, the utility company which supplies this electricity invoices the cost for recharging the battery 13 along with the rest of the electricity consumed in the home. If this receptacle belongs to, for example, a third party, such as a service station equipped with connection "posts" to the utility grid, the service station invoices the cost for recharging the battery.

In known proposals for carrying out this power transfer between batteries of electrical vehicles and utility grids, the initial hypothesis is based on the supposition that the vehicles have the configuration illustrated in Figure 1 and that the connection "posts" connected to the utility grid integrate, in one way or another, the elements required for allowing said transfers.

In another preferential execution, the quasi real time data transfer between the management and supervision modules is a data transfer system which uses the utility grid.

Figure 2 provides in greater detail the system for the transfer of electrical power between electrical vehicles 11 and a utility grid 15, which in accordance with this invention includes:
- A plurality of connection receptacles 21 for the connection of vehicles11 to a utility grid 15. It is considered that these connection receptacles 21 are located in places habitually used as vehicle parkings, whether public or private, in a way that their batteries 13 may be connected to the utility grid 15 as long as possible for the optimization of the electric power transfer in both directions. Between the connection receptacle 21 and the utility grid 15 a switch device 23 is placed which opens/closes the connection to the utility grid 15.
- A management module 31 for said transfer of electrical power located on board each of the vehicles 11 consisting of a multifunctional device installed, preferably in-factory, in the vehicle with means both for the technical management of electrical power transfer between the battery 13 and the utility grid 15 (technology is available for the conversion of the battery's direct current 13 to the alternating current of the utility grid 15 and vice versa) as well as for the management of the activation/deactivation of the power transfer processes in either direction, and the metering of the power transfer. Amongst those functions carried out by the management module 31 are found, therefore, those realized by the charger 6 of the conventional PHEV 11.

A supervision module 61 of this power transfer at each of the utility companies which operate the utility grid 15 (in the event that this utility grid 15 in question is, in reality, operated by several companies).

Prior to describing in greater detail the components of the system according to the invention and for a better understanding of these, we will refer briefly to the method for the transfer of electrical power between an electrical vehicle 11 and a utility grid 15.

The method implies two basic steps:
- Identification of and authorization for the connection of a vehicle 11 to the utility grid 15.
- Management of the power transfer between the battery 13 of the vehicle 11 and the utility grid 15 according to predetermined criteria.

The first aforementioned step includes, on one hand, activating the switch device 23 so that the vehicle 11 will access the utility grid 15 through a connection receptacle 21 and, on another hand, the exchange of information between the management module 31 inside the vehicle and the supervision module 61 at the utility company in order to notify of the vehicle's connection 11 to the utility grid 15.

The second aforementioned step includes both decision-making on the realization of one or another power transfer from the utility grid 15 to the battery 13 or vice versa, as well as the execution of these decisions by the management module 31 and also the realization of any actions derived from these, particularly the collection of data necessary for generating the invoice corresponding to each transfer.

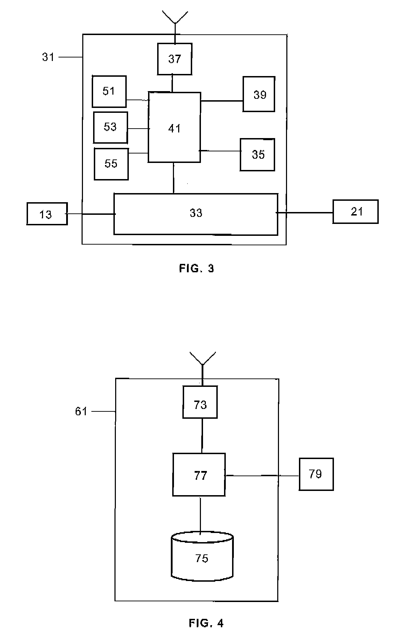

The management module 31 (see Figure 3) is made up of, at least, the following units:
- A bidirectional converter 33 for the transfer of electric power between the utility grid 15 (alternating current) and the battery 13 (direct current).
- A bidirectional meter 35 for metering the electric power transferred.
- A communications unit 37 with a data transmission system 71.
- A central control unit 41 composed of, at least, a first sub-unit 51 for storing information related with power transfers between the vehicle 11 and the utility grid 15.

According to a preferential execution, the management module is also composed of:
- A communications unit 39 which communicates with the vehicle 11 control panel, by means of, for example, DCLIN.
- In the central control unit 41, a second sub-unit 53 for storing information related with the usage patterns of the vehicle 11 (including, for example, information on timetables, travel locations and stops) and a third sub-unit for guaranteeing the availability of the vehicle 55 (with capacity for informing, as an example, the vehicle's owner through a message sent over mobile telephony concerning incidents with the vehicle or on the completion of the battery charging process 13).

On another hand, the supervision module 61 (see Figure 4) is made up of, at least, the following units:
- A communications unit 73 with a data transmission system 71.
- A database 75 with information on vehicles 11 authorized to use the utility grid operated by the company. As may be easily understood, this authorization will result of a contract formalized between the vehicle's owner and the utility company, in which the conditions corresponding with the services will be set forth. In this sense, the basic service for the transfer of electric power from the utility grid 15 to the vehicle 11 once the vehicle's connection to one of the connection receptacles 21 is identified, until the battery 13 is completely charged, as well as an additional service for the transfer of electric power from the vehicle 11 to the utility grid 15, using, thereby, the battery's 13 capacity for storing electrical energy, in the conditions stipulated in the contract.
- A central control unit 77 which, in a preferential execution, may be connected to the utility company's grid management systems 79 for the purpose of exchanging information related with power transfers between the utility grid 15 and the vehicles 11.

The communications between the management 31 and control 61 modules uses quasi real time data transfer. To the effects of this invention, it is understood that such a system allows for the exchange of communications between a management module 31 and a control module 61 in order to activate the execution of any power transfer process between the battery 13 and the utility grid 15, of a duration which, though not as quick as is the case with real-time systems, is acceptable for the purposes of this system.

In a preferential embodiment, the quasi real time data transfer between the management 31 and supervision 61 modules is a messaging system which uses wireless networks and, amongst these, mobile telephony 71.

In another preferential embodiment of the invention, the data transmission system between the management module 31 and the supervision module 61 is a data transfer system which uses the utility grid 15 (PLC).

This system which has been described allows for carrying out operations such as those which follow, described merely for the sake of providing examples.
- The management module 31, after exchanging information with the supervision module 61, activates the power transfer from the utility grid 15 to the battery 13 following predetermined criteria, like that which follows (considered individually or together):
   - the charge of the battery 13 is below a predetermined value.
   - the price of the power is below a predetermined value.
- The management module 31, after exchanging information with the supervision module 61, activates the power transfer from the battery to the electric grid 15 following predetermined criteria, like that which follows (considered individually or together):
   - the charge of the battery 13 is above a predetermined value.
   - the price of the power is above a predetermined value.
- The supervision module 61 calculates the potential demand for recharging of vehicles 11 connected to the utility grid 15 in a predetermined time interval, taking into account the information available on vehicle 11 usage patterns.
- The supervision module 61 calculates the potential capacity of electric power which may be extracted from the vehicle 11 batteries 13 connected to the utility grid 15 in a predetermined time interval.

Modifications may be made to this described preferential embodiment from amongst those included within the scope of the following claims.

## Claims

1. A system for the bidirectional transfer of electrical power between vehicles (11) equipped with a means for storing electrical energy (13) and a utility grid (15) operated by one or several utility companies, **characterized by** having:
- a) a plurality of receptacles (21) for connecting these vehicles (11) to the utility grid (15);
- b) a management module (31) of this electric energy transfer located on board each of these vehicles (11), composed of:
b1) a bidirectional converter (33) for the transfer of electric power between the utility grid (15) and the means for power storage (13);
b2) a bidirectional meter (35) for metering the electric power transferred;
b3) a communications unit (37) with a quasi real time data transfer system;
b4) a central control unit (41) composed of a first sub-unit (51) for storing information related with power transfers between the vehicle (11) and the utility grid (15);
- c) a supervision and command module (61) of this electric energy transfer located at each of the utility companies which includes:
c1) a communications unit (73) with a quasi real time data transfer system;
c2) a database (75) of vehicles (11) authorized to use the utility grid (15) operated by the company;
c3) a central control unit (77).

2. A system, according to claim 1, **characterized** because this management module (31) also comprises a unit (39) which communicates with the vehicle's control panel (11).

3. A system, according to claim 2, **characterized** because this central control unit (41) of the management module (31) also includes:
- a second sub-unit (53) for storing information related with the vehicle's usage patterns (11);
- a third sub-unit which guarantees the availability of the vehicle (55).

4. A system which, according to claim 1, is **characterized** because the central control unit (77) of the supervision module (61) is connected to the utility company's management system (79).

5. A system which, according to any of claims 1-4, is **characterized** because this quasi real time data transfer system is one of the following:
- a messaging system which uses mobile telephony networks (71);
- a messaging system which uses any other wireless network;
- a data transmission system which uses the utility grid (15).

6. A system which, according to any of claims 1-5, is **characterized** because the means used for energy storage (13) is a battery.

7. A system which, according to any of claims 1-6, is **characterized** because the receptacles used in the connections (21) are standard receptacles for connecting electrical devices having an interchange circuit between these and the utility grid (15) and a switch device (23).

8. A system which, according to claim 7, is **characterized** because this switch device (23) is governed by the supervision module (B1).

9. A system which, according to claim 7, is **characterized** because these connection receptacles (21) are located in parking spaces of public or private garages.

10. A method for the transfer of electrical power between vehicles (11) equipped with a means for storing electrical energy (13) and a utility grid (15) operated by one or several utility companies, **characterized by** implicating the following steps:
a) connecting these vehicles (11) to the utility grid (15) at one of the connection receptacles (21) ubiquitously foreseen for this purpose;
b) identifying and authorizing said connection;
c) managing the power transfer between the means for electrical power storage (13) and the utility grid (15) in either direction, according to predetermined criteria.
